# EUROPEAN PATENT SPECIFICATION

(11) **EP 3 618 163 B1**
(45) Date of publication and mention of the grant of the patent: **06.09.2023**
(21) Application number: 17907067.7
(22) Date of filing: 28.12.2017
(51) Int. Cl.: H01M 10/0567, H01M 10/0525, H01M 10/0568, H01M 10/0569

(54) **NON-AQUEOUS ELECTROLYTE SOLUTION, AND SECONDARY BATTERY COMPRISING THE SAME**
NICHTWÄSSRIGE ELEKTROLYTLÖSUNG, UND SEKUNDÄRBATTERIE DENSELBEN UMFASSEND
SOLUTION ÉLECTROLYTIQUE NON-AQUEUSE, ET BATTERIE SECONDAIRE LA COMPRENANT

(30) Priority: 28.04.2017 CN 201710290597
(43) Date of publication of application: 04.03.2020
(73) Proprietor: Zhangjiagang Guotai-Huarong New Chemical Materials Co., Ltd, Suzhou, Jiangsu 215634 (CN)
(72) Inventor: WANG, Feng, Suzhou Jiangsu 215634 (CN); SHI, Erbo, Suzhou Jiangsu 215634 (CN); QIN, Hu, Suzhou Jiangsu 215634 (CN); CHEN, Li, Suzhou Jiangsu 215634 (CN); CHEN, JunCai, Suzhou Jiangsu 215634 (CN); SHEN, Lei, Suzhou Jiangsu 215634 (CN); GAN, Chaolun, Suzhou Jiangsu 215634 (CN); YUAN, Xiangyun, Suzhou Jiangsu 215634 (CN)
(74) Representative: Latzel, Klaus
(86) International application number: PCT/CN2017/119155
(87) International publication number: WO 2018/196426

(56) References cited:
- EP-A1- 1 394 888
- EP-A1- 2 503 632
- CN-A- 101 557 019
- CN-A- 107 093 765
- JP-B2- 5 822 070
- KR-A- 20090 106 993
- US-A1- 2010 190 054

## Description

### Technical Field of the Invention

The present invention relates to the field of electrochemical techniques, in particular to a non-aqueous electrolyte and a secondary battery.

### Background Art of the Invention

In recent years, the widespread use of portable electronic devices such as mobile phones and notebook computers has promoted the demand for high energy density secondary batteries. Among many secondary batteries, lithium ion secondary batteries that realize energy conversion by intercalation and deintercalation of lithium ions have higher energy density than lead acid batteries and nickel hydrogen batteries, and occupy a dominant position in the compact battery market. With the advancement of materials technology and manufacturing processes, lithium ion secondary batteries are gradually being promoted in the fields of power tools, electric vehicles, and energy storage power sources, and the like.

The secondary battery mainly comprises a positive electrode, a negative electrode, a separator, and an electrolyte. As a medium for the charge and discharge reaction, the electrolyte has an important influence on the performance of the secondary battery.

In a lithium ion secondary battery using a carbon or silicon material as a negative electrode active material, the negative electrode active material easily reacts with the electrolyte during charge and discharge, resulting in decomposition of the electrolyte, and generally a solid electrolyte interface (SEI) film is formed from the electrolyte on the surface of the negative electrode by adding an additive, and can suppress the decomposition reaction of solvent molecules in the electrolyte. By adding vinylene carbonate (VC) to the electrolyte, it can have a film-forming effect on the surface of carbon and silicon negative electrodes.

However, when the battery is in a high temperature environment, the surface film will be decomposed and regenerated, and its protective effect will be weakened, which will cause the internal resistance of the battery to increase.

In a lithium ion secondary battery using a manganese-containing lithium transition metal composite oxide (such as LiMn₂O₄, LiNi_{1/3}Co_{1/3}Mn_{1/3}O₂, etc.) as a positive electrode active material, the dissolution and deposition on the surface of the negative electrode of manganese ions may cause deterioration in performance of the battery. When LiCoO₂ or LiNi_{0.5}Co_{0.2}Mn_{0.3}O₂ is used as the positive electrode active material, the charge cut-off voltage may sometimes be set to 4.3 V or higher in order to obtain a higher battery capacity, and in such a high voltage environment, the electrolyte is prone to be oxidative decomposed. Therefore, the protection of the positive electrode surface of the battery should also be taken seriously.

Patent document CN 1280942 C discloses that a passivation layer is formed on the electrode interface of a battery by a cyclic sulfonate ester, which prevents decomposition of the solvent, improves cycle performance of the battery, and suppresses an increase in internal resistance of the battery.

Patent document CN 100544108 C discloses that by adding a sulfonyl containing compound to an electrolyte, a protective film can be formed on the surface of the positive electrode, which suppresses side reactions between the positive electrode and the electrolyte, thereby improving the high-temperature storage performance of the battery.

EP 2 109 177 A1 and KR 2009 0106993 A describe non-aqueous electrolyte and secondary batteries using them. The electrolyte comprises an aprotic solvent and a disulfonic acid ester. One exemplary embodiment is 6-ethenyl-1,5,2,4-dioxadithiepane-2,2,4,4-tetraoxide.

EP 2 503 632 A1 and US 2010-0190054 A1 describe secondary batteries comprising electrolytic solutions containing cyclic disulfonic acid anhydrides.

### Summary of the Invention

The technical problem to be solved by the present invention is to provide a non-aqueous electrolyte and a secondary battery which can better improve the cycle performance of the battery and suppress the increase in internal resistance.

To solve the above problems, the technical solution employed by the present invention is:
One object of the present invention is to provide a non-aqueous electrolyte comprising a lithium salt, an organic solvent and an additive. The additive comprises a sulfonyl-containing compound, and the sulfonyl-containing compound is Compound (1) or
Compound (1) and Compound (2), wherein, a structural formula of Compound (1) is: 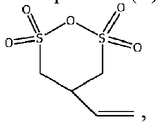 and a structural formula of Compound (2) is:

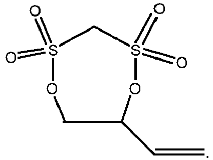

A synthetic route of Compound (1) is:

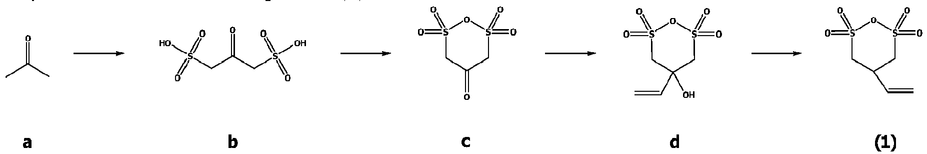

A method for preparing Compound (1) comprises the following steps:
Step (1), dropwise adding acetone to fuming sulfuric acid, and then reacting at 65 - 75 °C, cooling to room temperature, adding fuming sulfuric acid to reaction system, and then dropwise adding acetone to the reaction system, reacting at 70 - 80 °C, and post-treating after the reaction is completed to give Compound b;
Step (2), stirring and refluxing Compound b in the presence of an organic solvent, and post-treating after the reaction is completed to give Compound c;
Step (3), reacting Compound c and vinyl magnesium bromide in the presence of an organic solvent, and post-treating after the reaction is completed to give Compound d;
Step (4), reacting Compound d, triethylsilane and boron trifluoride diethyl ether solution in the presence of an organic solvent at -75 - -85 °C for 20 - 40 min, then reacting at room temperature for 50 - 70 min, and post-treating after the reaction is completed to give Compound (1).

Preferably, in Step (1), the content of SO₃ in the fuming sulfuric acid first added is 20 % - 30 %, and the content of SO₃ in the fuming sulfuric acid second added is 70 % - 80 %.

Preferably, in Step (1), the dropping temperature of acetone is below 20 °C.

Preferably, the organic solvent in Step (2) is thionyl chloride.

Preferably, the organic solvent in Step (3) is tetrahydrofuran.

Preferably, the organic solvent in Step (4) is acetonitrile.

Further preferably, a specific preparing method of Compound (1) is as follows:
Step (1), adding fuming sulfuric acid containing 23% SO₃ into a round bottom flask, slowly and dropwise adding acetone to reaction system, keeping the reaction temperature below 20 °C, stirring at 65 - 75 °C for 10 - 20 min after the completion of the dropwise addition, cooling to room temperature and adding fuming sulfuric acid containing 75% SO₃, then slowly and dropwise adding acetone to the reaction system, reacting at 70 - 80 °C for 50 - 70 min, and then cooling to room temperature after the reaction is completed, standing for several hours to gradually precipitate a pale yellow solid, filtering and washing the filter cake with nitromethane to obtain a crude product, which is then recrystallized from nitromethane to give a white solid as Compound b;
Step (2), adding Compound b and thionyl chloride into a reaction vessel, stirring and refluxing for 20 - 30 h, cooling to room temperature, filtering to obtain a crude product, which is then washed with a small amount of methylbenzene for several times and dried to give a white solid as Compound c;
Step (3), adding Compound c into tetrahydrofuran, slowly adding vinyl magnesium bromide at -5 - 5 °C, raising the temperature to room temperature after the completion of the addition, continuing to react for 20 - 30 h, adding saturated ammonium chloride aqueous solution and acetonitrile solution after the reaction is completed, separating, extracting the water layer with acetonitrile, merging the organic phases, drying over anhydrous magnesium sulfate, and concentrating to give Compound d;
Step (4), adding Compound d into acetonitrile, then adding triethyl silicane into the reaction system, slowly and dropwise adding boron trifluoride diethyl etherate solution to the reaction system at -45 - -55 °C, stirring for 20 - 40 min at -75 - -85 °C, raising the temperature to room temperature and continuing to stir for 50 - 70 min, slowly and dropwise adding saturated sodium bicarbonate to the reaction system to quench the reaction after the reaction is completed, separating, extracting the water phase with acetonitrile, merging the organic phases, drying over anhydrous magnesium sulfate, and concentrating to give a crude product, which is recrystallized from acetonitrile to give the target product Compound (1).

A synthetic route of Compound (2) is:

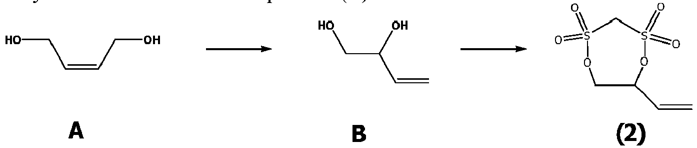

A method for preparing Compound (2) is: reacting Compound A, HgSO₄, H₂SO₄ and water at 90 - 110 °C to give Compound B, and then reacting Compound B and methane disulfonyl chloride in the presence of an organic solvent in an ice water bath for 50 - 70 min, and stirring and reacting at room temperature for 4 - 6 h to give Compound (2).

In the present invention, the room temperature is 0 - 40 °C, preferably 10 - 35 °C, more preferably 15 - 25 °C.

Preferably, the sulfonyl-containing compound is added in an amount of 0.01 - 10 % of the total mass of the non-aqueous electrolyte.

Further preferably, the sulfonyl-containing compound is added in an amount of 0.1 - 5 % of the total mass of the non-aqueous electrolyte, more preferably 1 - 5 %, most preferably 4 - 5 %.

Preferably, the additive further comprises a vinylene carbonate (VC).

Further preferably, the vinylene carbonate is added in an amount of 0.5 - 5 % of the total mass of the non-aqueous electrolyte, more preferably 0.5 - 2 %.

Further preferably, the additive is added in an amount of 0.01 - 10 % of the total mass of the non-aqueous electrolyte, more preferably 0.1 - 5 %, most preferably 4 - 5 %.

Preferably, the lithium salt is selected from lithium hexafluorophosphate (LiPF₆), lithium tetrafluoroborate (LiBF₄), lithium hexafluoroarsenate (LiAsF₆), anhydrous lithium perchlorate (LiClO₄), lithium bis(trifluoromethylsulfonyl)imide (LiN(SO₂CF₃)₂), lithium trifluoromethanesulfonate (LiSO₃CF₃), lithium bis(oxalate) borate (LiC₂O₄BC₂O₄), lithium monooxalate difluoroborate (LiF₂BC₂O₄), lithium bis(fluorosulfonyl)imide (LiN(SO₂F)₂), or combinations thereof.

Further preferably, a concentration of the lithium salt is 0.9 - 1.1 mol/L.

Preferably, the organic solvent is selected from ethylene carbonate (EC), propylene carbonate (PC), γ-butyrolactone (GBL), dimethyl carbonate (DMC), diethyl carbonate (DEC), ethyl methyl carbonate (EMC), methyl propyl carbonate (MPC), methyl propionate (MP), ethyl propionate (EP), propyl propionate (PP), methyl acetate (MA), ethyl acetate (EA), propyl acetate (PA), methyl butyrate (MB), ethyl butyrate (EB), propyl butyrate (PB), sulfolane, diethylene glycol dimethyl ether, triethylene glycol dimethyl ether, or combinations thereof.

Further preferably, the organic solvent is a mixed solvent of ethylene carbonate, dimethyl carbonate and ethyl methyl carbonate in a mass ratio of 1 : (0.9 - 1.1) : (0.9 - 1.1).

Further preferably, the organic solvent is a mixed solvent of ethylene carbonate, diethyl carbonate and ethyl methyl carbonate in a mass ratio of 1 : (0.9 - 1.1) : (0.9 - 1.1).

Another object of the present invention is to provide a secondary battery comprising the foregoing non-aqueous electrolyte.

Preferably, the secondary battery is a lithium ion secondary battery.

Preferably, both a positive electrode and a negative electrode of the secondary battery are capable of absorbing and desorbing lithium ions.

Further preferably, a positive electrode active material of the secondary battery is LiCoO₂ or LiMn₂O₄, and a negative electrode active material of the secondary battery is graphite or Li₄Ti₅O₁₂.

Due to the use of the above technical solutions, the present invention has the following advantages over the prior art:
In the present invention, by employing vinyl-containing and sulfonyl containing compound as the additive, the additive with the two structures contributes to the formation of a protective film on the surface of the battery electrode, and during charge and discharge cycles and high-temperature storage of the battery, the protective film has high stability, and can inhibit the decomposition of solvent molecules in the electrolyte, reduce the increase of battery internal resistance caused by accumulation of decomposition products on the surface of the electrode, and improve the energy storage performance of the battery.

### Detailed Description of Exemplary Embodiments

The present application is explained in detail combining with embodiments, but the application is not limited to these embodiments.

### Embodiment 1: Preparation of Compound (1)

190 g of fuming sulfuric acid (23% SO₃) was added into a round bottom flask, and acetone (17 g) was slowly and dropwise added to the reaction system, and the reaction temperature was kept below 20 °C. After the completion of the dropwise addition, the reaction system was stirred at 70 °C for 15 min, and cooled to room temperature, then 50 g of fuming sulfuric acid (75% SO₃) was added, then acetone (17 g) was slowly and dropwise added to the reaction system, and reacted at 75 °C for 1 h. After the reaction was completed, the reaction system was cooled to room temperature, stood for several hours to gradually precipitate a pale yellow solid and filtered, the filter cake was washed with nitromethane to obtain a crude product b (120 g), which was then recrystallized from nitromethane to give a white solid b (100 g, 79 % yield).

Compound b (100 g) and thionyl chloride (500 g) were added into a three-necked flask, stirred and refluxed for 24 h, cooled to room temperature, and filtered to obtain a crude product c, which was then washed with a small amount of methylbenzene for several times and dried to give Compound c (73 g, 80 % yield).

Compound c (70 g) was added into THF (300 mL), then a solution of vinyl magnesium bromide in THF was slowly added at 0 °C, wherein, a concentration of vinyl magnesium bromide in THF was 1.0 M, and after the completion of the addition, the temperature was raised to room temperature, and the reaction system continued to react for 24 h, and after the reaction was completed, saturated ammonium chloride aqueous solution (150 mL) and acetonitrile solution (300 mL) were added, and the reaction system was separated, and the water layer was extracted with acetonitrile, and the organic phases were merged, dried over anhydrous magnesium sulfate, and concentrated to give Compound d (64 g, 80 % yield).

Compound d (60 g) was added into 500 mL of acetonitrile, then triethyl silicane (60.5 g) was added into the reaction system, and boron trifluoride diethyl etherate solution (500 g) was slowly and dropwise added to the reaction system at -50 °C, and the reaction system was stirred at -78 °C for 30 min, the temperature was raised to room temperature and the mixture continued to stir for 1 h, and after the reaction was completed, saturated sodium bicarbonate was slowly and dropwise added to the reaction system to quench the reaction, and the reaction system was separated, then the water phase was extracted with acetonitrile, then the organic phases were merged, dried over anhydrous magnesium sulfate, and concentrated to give a crude product, which was recrystallized from acetonitrile to give the target product Compound (1) (33 g, 60 % yield).

### Embodiment 2: Preparation of Compound (2)

Compound A (600 g), HgSO₄ (2.5 g), H₂SO₄ (98%, 3.5 g) and 50 mL of water were added to a three-necked flask, and stirred at 100 °C for 3 h, and after the reaction was completed, the reaction system was vacuum distillated to give Compound B (370 g, 62 % yield). Methane disulfonyl chloride (746 g) was added into 1 L of THF, Compound B (308 g) was slowly and dropwise added into the reaction system, and after the addition reaction finished, the reaction system was stirred in an ice water bath for 1 h, and then heated to room temperature and continued to stir for 5 h, and after the reaction was completed, a white solid (519 g) was obtained, which was recrystallized from acetonitrile to give the target product Compound (2) (480 g, 60 % yield).

### Embodiment 3

### [Manufacture of positive electrode]

LiCoO₂, conductive carbon black and PVDF were weighed according to a mass ratio of 90: 5: 5, and an appropriate amount of NMP was added thereto, followed by thorough stirring to give a positive electrode slurry. The positive electrode slurry was coated on an aluminum foil, dried, and then rolled and cut to obtain a positive electrode.

### [Manufacture of negative electrode]

Graphite, styrene-butadiene rubber and carboxymethylcellulose were weighed according to a mass ratio of 95: 3: 2, and an appropriate amount of deionized water was added thereto, followed by thorough stirring to give a negative electrode slurry. The negative electrode slurry was coated on a copper foil, dried, and then rolled and cut to obtain a negative electrode.

### [Preparation of electrolyte]

Ethylene carbonate (EC), diethyl carbonate (DEC) and ethyl methyl carbonate (EMC) were mixed according to a mass ratio of 1 : 1 : 1 to obtain a mixed solvent, and lithium hexafluorophosphate was dissolved therein at a concentration of 1 mol/L. The additive Compound (1) 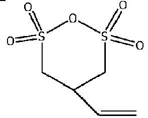 prepared in Embodiment 1 was added to give an electrolyte containing 1 wt% of Compound (1).

### [Manufacture of battery]

The above positive electrode, negative electrode, and electrolyte were used, a PE separator having a thickness of 20 µm was selected, and a soft pack battery was manufactured by a winding process, and its model number was 053048.

### [Battery performance test]

The battery charge and discharge test was performed at 25 °C with a voltage range of 3.0 - 4.4 V. After the battery was formed at a rate of 0.1 C, it was pre-cycled at a rate of 0.2 C for 5 cycles. Then the cyclic performance or the storage property was tested.

The cyclic performance test was to charge and discharge the battery at a rate of 1 C, and test the capacity retention rate after 500 cycles.

The storage performance test was to charge the battery to 4.4 V and place it in a 60°C oven for 7 days of storage. The internal resistances of the battery before and after storage were tested. Internal resistance increase rate = [(internal resistance after storage - internal resistance before storage) / internal resistance before storage] * 100%.

### Embodiment 4

The battery was manufactured in the same manner as in Embodiment 3 except that the electrolyte contained 3 wt% of Compound (1). The battery performance test was conducted in the same manner as in Embodiment 3.

### Embodiment 5

The battery was manufactured in the same manner as in Embodiment 5 except that the electrolyte contained 5 wt% of Compound (1). The battery performance test was conducted in the same manner as in Embodiment 3.

### Embodiment 6 (outside the scope of the claims)

The battery was manufactured in the same manner as in Embodiment 3 except that Compound (1) was replaced with Compound (2) 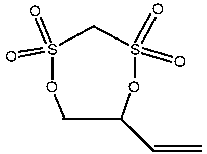 prepared in Embodiment 2. The battery performance test was conducted in the same manner as in Embodiment 3.

### Embodiment 7

The battery was manufactured in the same manner as in Embodiment 3 except that the electrolyte contained 2 wt% of Compound (1) prepared in Embodiment 1 and 2 wt% of Compound (2) prepared in Embodiment 2. The battery performance test was conducted in the same manner as in Embodiment 3.

### Embodiment 8

The battery was manufactured in the same manner as in Embodiment 3 except that the electrolyte contained 2 wt% of Compound (1) prepared in Embodiment 1, 2 wt% of Compound (2) prepared in Embodiment 2 and 1 wt% of VC. The battery performance test was conducted in the same manner as in Embodiment 3.

### Comparative example 1

The battery was manufactured in the same manner as in Embodiment 3 except that Compound (1) was not added to the electrolyte. The battery performance test was conducted in the same manner as in Embodiment 3.

### Comparative example 2

The battery was manufactured in the same manner as in Embodiment 3 except that Compound (1) was replaced with VC. The battery performance test was conducted in the same manner as in Embodiment 3.

The battery performance test results of Embodiments 1 - 6 and Comparative Examples 1 - 2 are shown in Table 1.

**Table 1**

| | Battery | Additive | Capacity retention rate after 500 cycles (%) | Internal resistance increase rate (%) |
|---|---|---|---|---|
| Embodiment 3 | LiCoO₂/ Graphite | 1 wt% Compound (1) | 76 | 45 |
| Embodiment 4 | LiCoO₂/ Graphite | 3 wt% Compound (1) | 81 | 38 |
| Embodiment 5 | LiCoO₂/ Graphite | 5 wt% Compound (1) | 84 | 23 |
| Embodiment 6 (comparative) | LiCoO₂/ Graphite | 1 wt% Compound (2) | 79 | 41 |
| Embodiment 7 | LiCoO₂/ Graphite | 2 wt% Compound (1) + 2 wt% Compound (2) | 86 | 28 |
| Embodiment 8 | LiCoO₂/ Graphite | 2 wt% Compound (1) + 2 wt% Compound (2) + 1 wt% VC | 89 | 16 |
| Comparative example 1 | LiCoO₂/ Graphite | None | 47 | 206 |
| Comparative example 2 | LiCoO₂/ Graphite | 1 wt% VC | 63 | 113 |

Compared with Comparative Examples 1 and 2, the batteries of Embodiments 3 - 8 have an improved capacity retention rate and a lower internal resistance increase rate, i.e., the batteries have better cycle performance and storage performance. The combination of Compounds (1) and (2) has a synergistic effect.

### Embodiment 9 (outside the scope of the claims)

### [Manufacture of positive electrode]

LiMn₂O₄, conductive carbon black and PVDF were weighed according to a mass ratio of 90 : 5 : 5, and an appropriate amount of NMP was added thereto, followed by thorough stirring to give a positive electrode slurry. The positive electrode slurry was coated on an aluminum foil, dried, and then rolled and cut to obtain a positive electrode.

### [Manufacture of negative electrode]

Li₄Ti₅O₁₂, styrene-butadiene rubber and carboxymethylcellulose were weighed according to a mass ratio of 95 : 3 : 2, and an appropriate amount of deionized water was added thereto, followed by thorough stirring to give a negative electrode slurry. The negative electrode slurry was coated on a copper foil, dried, and then rolled and cut to obtain a negative electrode.

### [Preparation of electrolyte]

Ethylene carbonate (EC), dimethyl carbonate (DMC) and ethyl methyl carbonate (EMC) were mixed according to a mass ratio of 1: 1: 1 to obtain a mixed solvent, and lithium hexafluorophosphate was dissolved therein at a concentration of 1 mol/L. The additive Compound (2) 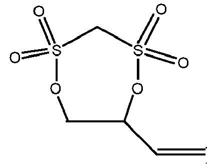 prepared in Embodiment 2 was added to give an electrolyte containing 1 wt% of Compound (2).

### [Manufacture of battery]

The above positive electrode, negative electrode, and electrolyte were used, a PE separator having a thickness of 20 µm was selected, and a cylinder battery was manufactured by a winding process, and its model number was 18650.

### [Battery performance test]

The battery charge and discharge test was performed at 25 °C with a voltage range of 1.5 - 2.7 V. After the battery was formed at a rate of 0.1 C, it was pre-cycled at a rate of 0.2 C for 5 cycles. Then the cyclic performance or the storage performance was tested.

The cyclic performance test was to charge and discharge the battery at a rate of 1 C, and test the capacity retention rate after 800 cycles.

The storage performance test was to charge the battery to 2.7 V and place it in a 60 °C oven for 7 days of storage. The internal resistances of the battery before and after storage were tested. Internal resistance increase rate = [(internal resistance after storage - internal resistance before storage) / internal resistance before storage] * 100%.

### Embodiment 10 (outside the scope of the claims)

The battery was manufactured in the same manner as in Embodiment 9 except that the electrolyte contained 3 wt% of Compound (2) prepared in Embodiment 2. The battery performance test was conducted in the same manner as in Embodiment 9.

### Embodiment 11 (outside the scope of the claims)

The battery was manufactured in the same manner as in Embodiment 9 except that the electrolyte contained 5 wt% of Compound (2) prepared in Embodiment 2. The battery performance test was conducted in the same manner as in Embodiment 9.

### Embodiment 12

The battery was manufactured in the same manner as in Embodiment 9 except that Compound (2) was replaced with Compound (1) prepared in Embodiment 1. The battery performance test was conducted in the same manner as in Embodiment 9.

### Embodiment 13

The battery was manufactured in the same manner as in Embodiment 9 except that the electrolyte contained 2 wt% of Compound (1) prepared in Embodiment 1 and 2 wt% of Compound (2) prepared in Embodiment 2. The battery performance test was conducted in the same manner as in Embodiment 9.

### Comparative example 3

The battery was manufactured in the same manner as in Embodiment 9 except that Compound (2) was not added to the electrolyte. The battery performance test was conducted in the same manner as in Embodiment 9.

### Comparative example 4

The battery was manufactured in the same manner as in Embodiment 9 except that Compound (2) was replaced with 1,3-propane sultone (1,3-PS). The battery performance test was conducted in the same manner as in Embodiment 9.

The battery performance test results of Embodiments 9 - 13 and Comparative Examples 3 - 4 are shown in Table 2.

**Table 2**

| | Battery | Additive | Capacity retention rate after 800 cycles (%) | Internal resistance increase rate (%) |
|---|---|---|---|---|
| Embodiment 9 (comparative) | LiMn₂O₄ /Li₄Ti₅O₁₂ | 1 wt% Compound (2) | 83 | 36 |
| Embodiment 10 (comparative) | LiMn₂O₄ /Li₄Ti₅O₁₂ | 3 wt% Compound (2) | 85 | 31 |
| Embodiment 11 (comparative) | LiMn₂O₄ /Li₄Ti₅O₁₂ | 5 wt% Compound (2) | 87 | 20 |
| Embodiment 12 | LiMn₂O₄ /Li₄Ti₅O₁₂ | 1 wt% Compound (1) | 84 | 32 |
| Embodiment 13 | LiMn₂O₄ /Li₄Ti₅O₁₂ | 2 wt% Compound (1) + 2 wt% Compound (2) | 92 | 15 |
| Comparative example 3 | LiMn₂O₄ /Li₄Ti₅O₁₂ | None | 69 | 74 |
| Comparative example 4 | LiMn₂O₄ /Li₄Ti₅O₁₂ | 1% 1,3-PS | 78 | 58 |

Compared with Comparative Examples 3 and 4, the batteries of Embodiments 9-13 have an improved capacity retention rate and a lower internal resistance increase rate, i.e., the batteries have better cycle performance and storage performance. The combination of Compounds (1) and (2) has a synergistic effect.

The embodiments described above are only for illustrating the technical concepts and features of the present invention, and are intended to make those skilled in the art being able to understand the present invention and thereby implement it, and should not be concluded to limit the protective scope of this disclosure.

## Claims

1. A non-aqueous electrolyte comprising a lithium salt, an organic solvent and an additive, wherein the additive comprises a sulfonyl-containing compound, **characterized in that** the sulfonyl-containing compound is Compound (1) or Compound (1) and Compound (2), wherein a structural formula of Compound (1) is; 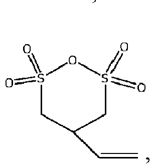 and a structural formula of Compound (2) is:

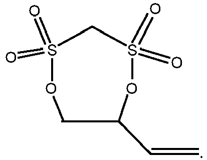

2. The non-aqueous electrolyte according to claim 1, **characterized in that** the sulfonyl-containing compound is added in an amount of 0.01 - 10 % of the total mass of the non-aqueous electrolyte.

3. The non-aqueous electrolyte according to claim 2, **characterized in that** the sulfonyl-containing compound is added in an amount of 0.1 - 5 % of the total mass of the non-aqueous electrolyte.

4. The non-aqueous electrolyte according to any one of the preceding claims, **characterized in that** the additive further comprises a vinylene carbonate.

5. The non-aqueous electrolyte according to claim 4, **characterized in that** the vinylene carbonate is added in an amount of 0.5 - 5 % of the total mass of the non-aqueous electrolyte.

6. The non-aqueous electrolyte according to any one of the preceding claims, **characterized in that** the lithium salt is selected from lithium hexafluorophosphate, lithium tetrafluoroborate, lithium hexafluoroarsenate, anhydrous lithium perchlorate, lithium bis(trifluoromethylsulfonyl)imide, lithium trifluoromethanesulfonate, lithium bis(oxalate) borate, lithium monooxalate difluoro borate, lithium bis(fluorosulfonyl)imide, or combinations thereof.

7. The non-aqueous electrolyte according to any one of the preceding claims, **characterized in that** the organic solvent is selected from ethylene carbonate, propylene carbonate, γ-butyrolactone, dimethyl carbonate, diethyl carbonate, ethyl methyl carbonate, methyl propyl carbonate, methyl propionate, ethyl propionate, propyl propionate, methyl acetate, ethyl acetate, propyl acetate, methyl butyrate, ethyl butyrate, propyl butyrate, sulfolane, diethylene glycol dimethyl ether, triethylene glycol dimethyl ether, or combinations thereof.

8. The non-aqueous electrolyte according to any one of the preceding claims, **characterized in that** a synthetic route of Compound (1) is:

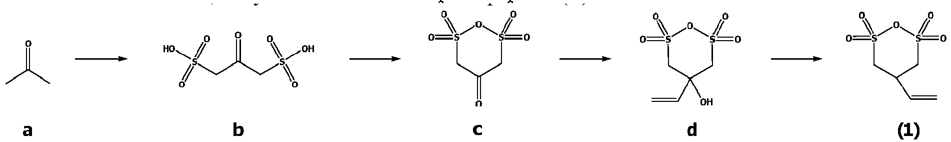

9. The non-aqueous electrolyte according to claim 8, **characterized in that** Compound (1) is prepared by following steps:
Step (1), dropwise adding acetone to fuming sulfuric acid, and then reacting at 65 - 75 °C, cooling to room temperature, adding fuming sulfuric acid to reaction system, and then dropwise adding acetone to the reaction system, reacting at 70 - 80 °C, and post-treating after the reaction is completed to give Compound b;
Step (2), stirring and refluxing Compound b in the presence of an organic solvent, and post-treating after the reaction is completed to give Compound c;
Step (3), reacting Compound c and vinyl magnesium bromide in the presence of an organic solvent, and post-treating after the reaction is completed to give Compound d;
Step (4), reacting Compound d, triethylsilane and boron trifluoride diethyl ether solution in the presence of an organic solvent at -75 - -85 °C for 20 - 40 min, then reacting at room temperature for 50 - 70 min, and post-treating after the reaction is completed to give Compound (1).

10. The non-aqueous electrolyte according to any one of the preceding claims, **characterized in that** a synthetic route of Compound (2) is:

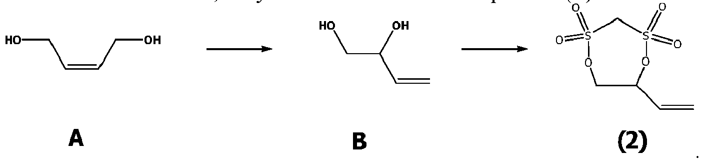

11. The non-aqueous electrolyte according to claim 10, **characterized in that** Compound (2) is prepared by following steps: reacting Compound A, HgSO₄, H2SO4 and water at 90 - 110 °C to give Compound B, and then reacting Compound B and methane disulfonyl chloride in the presence of an organic solvent in an ice water bath for 50 - 70 min, and stirring and reacting at room temperature for 4 - 6 h to give Compound (2).

12. A secondary battery, **characterized in that** it comprises the non-aqueous electrolyte according to any one of claims 1 to 11.

13. The secondary battery according to claim 12, **characterized in that** the secondary battery is a lithium ion secondary battery.

## Patentansprüche

1. Ein nichtwässeriger Elektrolyt, umfassend ein Lithiumsalz, ein organisches Lösungsmittel und ein Additiv, wobei das Additiv eine Sulfonyl-haltige Verbindung umfasst, **dadurch gekennzeichnet, dass** die Sulfonyl-haltige Verbindung Verbindung (1) oder Verbindung (1) und Verbindung (2) ist, wobei eine Strukturformel der Verbindung (1) 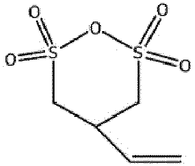 ist und eine Strukturformel der Verbindung (2) 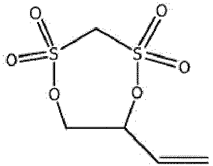 ist.

2. Der nichtwässerige Elektrolyt gemäß Anspruch 1, **dadurch gekennzeichnet, dass** die Sulfonyl-haltige Verbindung in einer Menge von 0,01 - 10 % der Gesamtmasse des nichtwässerigen Elektrolyten zugegeben ist.

3. Der nichtwässerige Elektrolyt gemäß Anspruch 1, **dadurch gekennzeichnet, dass** die Sulfonyl-haltige Verbindung in einer Menge von 0,1 - 5 % der Gesamtmasse des nichtwässerigen Elektrolyten zugegeben ist.

4. Der nichtwässerige Elektrolyt gemäß einem der vorherigen Ansprüche, **dadurch gekennzeichnet, dass** das Additiv ferner ein Vinylencarbonat umfasst.

5. Der nichtwässerige Elektrolyt gemäß Anspruch 4, **dadurch gekennzeichnet, dass** das Vinylencarbonat in einer Menge von 0,5 - 5 % der Gesamtmasse des nichtwässerigen Elektrolyten zugegeben ist.

6. Der nichtwässerige Elektrolyt gemäß einem der vorherigen Ansprüche, **dadurch gekennzeichnet, dass** das Lithiumsalz ausgewählt ist aus: Lithiumhexafluorophosphat, Lithiumtetrafluoroborat, Lithiumhexafluoroarsenat, wasserfreies Lithiumperchlorat, Lithium-bistrifluoromethylsulfonyl)imid, Lithiumtrifluoromethansulfonat, Lithiumbis(oxalato)borat, Lithium-difluoro-mono(oxalato)borat, Lithium-bis(fluorosulfonyl)imid oder Kombinationen daraus.

7. Der nichtwässerige Elektrolyt gemäß einem der vorherigen Ansprüche, **dadurch gekennzeichnet, dass** das organische Lösungsmittel ausgewählt ist aus: Ethylencarbonat, Propylencarbonat, γ-Butyrolacton, Dimethylcarbonat, Diethylcarbonat, Ethylmethylcarbonat, Methylpropylcarbonat, Methylproprionat, Etylpropionat, Propylpropionat, Methylacetat, Ethylacetat, Propylacetat, Methylbutyrat, Ethylbutyrat, Propylbutyrat, Sulfolan, Diethylenglykoldimethylether, Triethylenglykoldimethylether oder Kombinationen daraus.

8. Der nichtwässerige Elektrolyt gemäß einem der vorherigen Ansprüche, **dadurch gekennzeichnet, dass** ein Herstellungsweg für Verbindung (1) folgendermaßen ist:

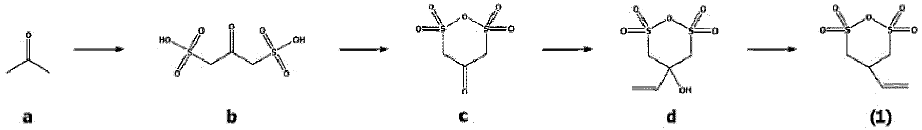

9. Der nichtwässerige Elektrolyt gemäß Anspruch 8, **dadurch gekennzeichnet, dass** die Verbindung (1) durch die folgenden Schritte hergestellt ist:
Schritt (1): Tropfenweise Zugabe von Aceton in rauchende Schwefelsäure und Reagieren lassen bei 65 - 75 °C, Abkühlen auf Raumtemperatur, Zugabe von rauchender Schwefelsäure in das Reaktionssystem, danach tropfenweise Zugabe von Aceton zu dem Reaktionssystem, Reagieren lassen bei 70 - 80 °C, und Nachbehandlung nach Reaktionsende, um Verbindung b zu erhalten;
Schritt (2): Rühren der Verbindung b in Gegenwart eines organischen Lösungsmittels unter Refluxbedingungen und Nachbehandlung nach Reaktionsende, um Verbindung c zu erhalten;
Schritt (3): Reagieren lassen von Verbindung c mit Vinylmagnesiumbromid in Gegenwart eines organischen Lösungsmittels und Nachbehandlung nach Reaktionsende, um Verbindung d zu erhalten;
Schritt (4): Reagieren lassen von Verbindung d, Triethylsilan und einer Bortrifluorid-diethylether-Lösung in Gegenwart eines organischen Lösungsmittels bei -75--85 °C über 40 min, danach Reagieren lassen bei Raumtemperatur über 50 - 70 min, und Nachbehandlung nach Reaktionsende, um Verbindung (1) zu erhalten.

10. Der nichtwässerige Elektrolyt gemäß einem der vorherigen Ansprüche, **dadurch gekennzeichnet, dass** ein Herstellungsweg für Verbindung (2) folgendermaßen ist:

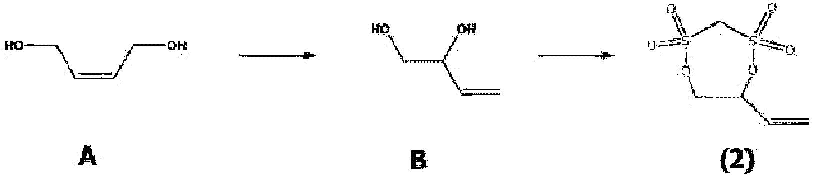

11. Der nichtwässerige Elektrolyt gemäß Anspruch 10, **dadurch gekennzeichnet, dass** die Verbindung (2) gemäß den folgenden Schritten hergestellt ist: Reagieren lassen von Verbindung A, HgSO₄, H₂SO₄ und Wasser bei 90 - 110 °C, um Verbindung B zu erhalten, und danach Reagieren lassen von Verbindung B mit Methandisulfonylchlorid in Gegenwart eines organischen Lösungsmittels in einem Eiswasser-Bad über 50 - 70 min, und bei Raumtemperatur über 4 - 6 h Rühren und Reagieren lassen, um die Verbindung (2) zu erhalten.

12. Eine Sekundärbatterie, **dadurch gekennzeichnet, dass** sie den nichtwässerigen Elektrolyten gemäß einem der Ansprüche 1 bis 11 umfasst.

13. Die Sekundärbatterie gemäß Anspruch 12, **dadurch gekennzeichnet, dass** die Sekundärbatterie eine Lithiumionen-Sekundärbatterie ist.

## Revendications

1. Electrolyte non aqueux comprenant un sel de lithium, un solvant organique et un additif, l'additif comprenant un composé à teneur en sulfonyle, **caractérisé par le fait que** le composé à teneur en sulfonyle est le Composé (1) ou le Composé (1) et le Composé (2), dans lequel une formule structurale du Composé (1) est : 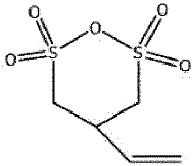 et une formule structurale du Composé (2) est:

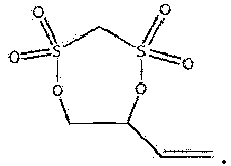

2. Electrolyte non aqueux selon la revendication 1, **caractérisé par le fait que** le composé à teneur en sulfonyle est ajouté en une quantité de 0,01 à 10 % de la masse totale de l'électrolyte non aqueux.

3. Electrolyte non aqueux selon la revendication 2, **caractérisé par le fait que** le composé à teneur en sulfonyle est ajouté en une quantité de 0,1 à 5 % de la masse totale de l'électrolyte non aqueux.

4. Electrolyte non aqueux selon l'une quelconque des revendications précédentes, **caractérisé par le fait que** l'additif comprend en outre un carbonate de vinylène.

5. Electrolyte non aqueux selon la revendication 4, **caractérisé par le fait que** le carbonate de vinylène est ajouté en une quantité de 0,5 à 5 % de la masse totale de l'électrolyte non aqueux.

6. Electrolyte non aqueux selon l'une quelconque des revendications précédentes, **caractérisé par le fait que** le sel de lithium est choisi parmi l'hexafluorophosphate de lithium, le tétrafluoroborate de lithium, l'hexafluoroarséniate de lithium, le perchlorate de lithium anhydre, le bis(trifluorométhylsulfonyl)imide de lithium, le trifluorométhanesulfonate de lithium, le bis(oxalate) borate de lithium, le monooxalate difluor oborate de lithium, le bis(fluorosulfonyl)imide de lithium ou les combinaisons de ceux-ci.

7. Electrolyte non aqueux selon l'une quelconque des revendications précédentes, **caractérisé par le fait que** le solvant organique est choisi parmi le carbonate d'éthylène, le carbonate de propylène, la γ-butyrolactone, le carbonate de diméthyle, le carbonate de diéthyle, le carbonate d'éthyle et de méthyle, le carbonate de propyle et de méthyle, le propionate de méthyle, le propionate d'éthyle, le propionate de propyle, l'acétate de méthyle, l'acétate d'éthyle, l'acétate de propyle, le butyrate de méthyle, le butyrate d'éthyle, le butyrate de propyle, le sulfolane, l'éther diméthylique du diéthylène glycol, l'éther diméthylique du triéthylène glycol ou les combinaisons de ceux-ci.

8. Electrolyte non aqueux selon l'une quelconque des revendications précédentes, **caractérisé par le fait qu'**une voie de synthèse du Composé (1) est:

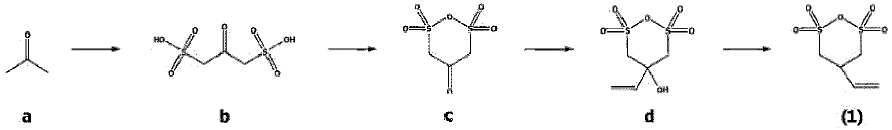

9. Electrolyte non aqueux selon la revendication 8, **caractérisé par le fait que** le Composé (1) est préparé par les étapes suivantes:
Etape (1), addition goutte à goutte d'acétone à de l'acide sulfurique fumant, puis réaction à 65 - 75 °C, refroidissement jusqu'à la température ambiante, addition d'acide sulfurique fumant au système réactionnel, puis addition goutte à goutte d'acétone au système réactionnel, réaction à 70 - 80°C, et post-traitement une fois la réaction terminée pour donner le Composé b;
Etape (2), agitation et mise au reflux du Composé b en présence d'un solvant organique, et post-traitement une fois la réaction terminée pour donner le Composé c;
Etape (3), réaction du Composé c et de bromure de vinyl magnésium en présence d'un solvant organique, et post-traitement une fois la réaction terminée pour donner le Composé d;
Etape (4), réaction du Composé d, de triéthylsilane et d'une solution trifluorure de bore éther diéthylique en présence d'un solvant organique à -75 à -85 °C pendant 20 à 40 min, puis réaction à la température ambiante pendant 50 à 70 min, et post-traitement une fois la réaction terminée pour donner le Composé (1).

10. Electrolyte non aqueux selon l'une quelconque des revendications précédentes, **caractérisé par le fait qu'**une voie de synthèse du Composé (2) est :

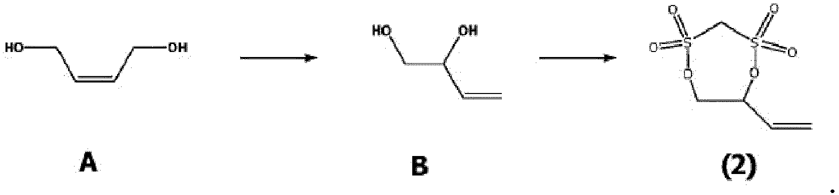

11. Electrolyte non aqueux selon la revendication 10, **caractérisé par le fait que** le Composé (2) est préparé par les étapes suivantes : réaction du Composé A, HgSO₄, H₂SO₄ et d'eau à 90 - 110 °C pour donner le Composé B, puis réaction du Composé B et de chlorure de méthane disulfonyle en présence d'un solvant organique dans un bain d'eau glacée pendant 50 à 70 min, et agitation et réaction à la température ambiante pendant 4 à 6 h pour donner le Composé (2).

12. Batterie secondaire, **caractérisée par le fait qu'**elle comprend l'électrolyte non aqueux selon l'une quelconque des revendications 1 à 11.

13. Batterie secondaire selon la revendication 12, **caractérisée par le fait que** la batterie secondaire est une batterie secondaire lithium-ion.
